# EUROPEAN PATENT SPECIFICATION

(11) **EP 3 656 450 B1**
(45) Date of publication and mention of the grant of the patent: **28.07.2021**
(21) Application number: 19202457.8
(22) Date of filing: 10.10.2019
(51) Int. Cl.: A63C 5/03, A63C 5/075, B62B 13/04, B62B 17/06

(54) **SUSPENSION ASSEMBLY FOR A SNOW SPORTS BOARD**
DÄMPFUNGSANORDNUNG FÜR EIN WINTERSPORTBRETT
ENSEMBLE DE SUSPENSION POUR PLANCHE DE SPORTS D'HIVER

(30) Priority: 15.11.2018 US 201862767739 P
(43) Date of publication of application: 27.05.2020
(73) Proprietor: Yak Board, LLC., Exeter, New Hampshire 03833 (US)
(72) Inventor: Thompson, Robert W., Exeter, New Hampshire NH 03833 (US)
(74) Representative: AWA Sweden AB

(56) References cited:
- WO-A1-2018/075348
- WO-A2-03/101554
- FR-A1- 2 813 021
- US-A1- 2006 027 982
- US-A1- 2009 140 503
- US-A1- 2016 229 442

## Description

### TECHNICAL FIELD

The present disclosure relates generally to equipment for snow sports. Specifically, the present disclosure relates to a suspension assembly for riders of a snow sports board.

### BACKGROUND

Skiing, snowboarding, and sledding are snow sports enjoyed for recreation and competition in many countries around the world. Skiing and snowboarding involve descending snowy terrain in a standing position with the rider's feet attached to the skis or snowboard. Sledding, by contrast, involves the rider descending a snowy hill while sitting, kneeling, or lying on a sled with no particular attachment to the sled other than the rider's grip. WO 2018/075348 discloses a binding and support assembly for use with snow sports boards includes a front assembly with a knee platform and a rear assembly with a foot/ankle support. In yet another winter activity, some use a kayak to descend a hill covered with loose snow while using a paddle to make turns, much like is done in whitewater.

### BRIEF DESCRIPTION OF THE DRAWINGS

FIGURE 1 illustrates a side view of a suspension assembly mounted to a snow sports board, in accordance with an embodiment of the present disclosure.
FIGURE 2 illustrates a side view of the suspension assembly of FIG. 1 shown with the shock absorber compressed in response to a downward load applied to the seat, in accordance with an embodiment of the present disclosure.
FIGURE 3 illustrates a side view of a suspension assembly that includes a seat, a knee support, and a foot support, in accordance with an embodiment of the present disclosure.
FIGURE 4 illustrates a side view of a suspension assembly and rider to show an example active-use position with the rider's feet on the board, in accordance with an embodiment of the present disclosure.
FIGURES 5A-5C illustrate side views showing example positions of a rider on a suspension assembly preparing to board, boarding, and after boarding a chairlift, respectively, in accordance with an embodiment of the present disclosure.
FIGURE 6 illustrates a side view of a rider on a suspension assembly in an example active-use position with the rider seated, the rider's lower leg on a knee support platform, and the rider's feet engaging a foot support, in accordance with an embodiment of the present disclosure.
FIGURE 7 illustrates a side view of a rider in an example active-use position on a suspension assembly in which the rider is seated and the rider's feet are on a foot support, in accordance with an embodiment of the present disclosure.
FIGURE 8 illustrates a side view of a rider in an example active-use position on a suspension assembly with the rider's knees and shins on a knee support platform and feet in contact with a foot support, in accordance with an embodiment of the present disclosure.
FIGURE 9 illustrates a perspective view showing the front and left side of a suspension assembly that includes a seat with hip plates and knee support platform with contoured knee pads, in accordance with an embodiment of the present disclosure.
FIGURE 10 illustrates a side view of the suspension assembly of FIG. 9.
FIGURE 11 illustrates a side view of a suspension assembly mounted on a snow sports board and including a padded knee support and elongated seat, in accordance with an embodiment of the present disclosure.
FIGURES 12 and 13 illustrate rear perspective views showing components of a suspension assembly, in accordance with some embodiments of the present disclosure.
FIGURE 14 illustrates a rear view of a suspension assembly that includes a suspension assembly, seat with hip plates, foot support, and knee support platform with shin guards, in accordance with an embodiment of the present disclosure.

The figures depict various embodiments of the present disclosure for purposes of illustration only. Numerous variations, configurations, and other embodiments will be apparent from the following detailed discussion.

### DETAILED DESCRIPTION

Disclosed are assemblies and components of a suspension assembly for use with a snow sports board, such as a snowboard or ski. The suspension assembly is configured for use by a rider in a seated or kneeling, face-forward position. In accordance with some embodiments, the suspension assembly includes a seat on top of frame and a shock absorber between the snow sports board and the frame. For example, the frame generally has an inverted-L shape with the seat mounted on a part of the frame that extends rearwardly over the board. A shock absorber is connected to the downward-extending portion of the frame such that the frame is connected to the board by the shock absorber and by linkages extending between the frame and a base mounted to the board. The suspension assembly enables the rider to ride the board in a seated, face-forward position with the rider's knees forward of and lower than the rider's hips. For example, the rider may position the knees on a knee platform that includes support plates on opposite sides of the suspension assembly and positioned below the seat. In some such configurations, the rider's feet can rest on a foot support below the seat or can remain suspended over the board. In another example, the rider's feet can be placed on a foot peg or foot support attached to the board or to a rear portion of the suspension assembly.

In accordance with some embodiments, the suspension assembly facilitates the user in transferring weight to the board to initiate and make turns on a snow sports board while in a seated or kneeling, face-forward position. The rider's height above the board can be used for leverage during turning. For example, the rider's center of mass above the board enables the rider to use the suspension assembly as a lever to put the board on edge. In skiing, the skier's legs and knees act as a shock absorber to absorb centrifugal forces generated during a turn. Similarly, on a snow sports board, the centrifugal force acts on the rider towards the board, but since the rider is not in a standing position on the board, the legs and knees are not used in the same way to absorb the centrifugal force. The suspension assembly is generally configured to dampen vibrations and to absorb and reduce the impact forces to the rider associated with bumps, jumps, and centrifugal force generated during turns, for example. The suspension assembly may also help the rider transfer centrifugal force to forward momentum, and therefore speed, when coming out of a turn.

In accordance with some embodiments, a suspension assembly is configured to enable the user to board a chairlift while in an active-use position, such as when the rider is seated on the seat with knees (and/or part of the lower leg) on a support platform. For example, the portion of the frame supporting the seat is cantilevered above the board at a height to receive a chairlift seat in the unobstructed region below the seat. Without modifying or changing the configuration of the suspension assembly, the rider may board the chairlift in an active-use position with the seat and part of the frame on top of the chairlift seat. Numerous embodiments and variations will be apparent in light of the present disclosure.

### General Overview

Snow sports boards, such as snowboards and skis, are commonly ridden by the user in an upright, standing position. For a different experience that is similar to whitewater kayaking, some users desire to ride a snowboard or other snow sports board in a kneeling position. One such approach uses a shallow platform mounted to a snowboard and is shaped to accept the rider's knees. The platform situates the rider in a kneeling position on the board with the rider sitting on the feet below the rider's body. Such an approach has been found to be inefficient in transferring the user's weight to the board, therefore making it difficult to control and turn the board. Further, the rider's position on the board has been found to be uncomfortable generally, and painful after extended use due to the forces exerted on the rider's feet and ankles.

Another approach is the sit ski, which was developed for the adaptive community, such as those who may not have use of the lower body. The rider of a sit ski has a face-forward, recumbent position with the rider's hips retained in a bucket-style seat and with the rider's knees and feet extending in front of the rider. The seat is attached to a ski using a traditional binding, where the seat assembly occupies the position normally occupied by a ski boot. To achieve a low center of gravity, the rider's hips are positioned vertically below the knees with the upper leg (e.g., femur) extending upward from the hip to the knee. With the rider's hips at the lowest point in some cases, the rider's knees are close to or actually contact the rider's chest, such as during turns.

To initiate a turn on a sit ski, the rider must use outriggers, such as a partial length of a ski attached to the lower end of a pole. Due to the rider's recumbent body position in a sit ski, and also due to the rider's own physical limitations in some cases, it is difficult to transfer weight to the edge of the ski to initiate a turn. Instead, the rider uses friction of the outrigger against the snow to rebalance the sit ski, create drag, or both to initiate and make a turn. An additional challenge of the sit ski, even for able-bodied riders, is that the body position makes it difficult to initiate a turn without the use of outriggers. The rider's center of gravity is over the ski, but the rider's upper body is behind the ski's center since the rider's legs and part of the seat extend forward. Since the rider is in a reclined or recumbent position with legs extending forward, it is difficult to shift one's body weight to set the ski on edge for turning. Further, since the rider is in a constrained position over the ski, the sit ski is inherently unstable and prone to tipping when not moving. For these reasons, riders of the sit ski generally consider outriggers to be an essential accessory.

Due to the challenges of the sit ski and of other available designs, a need exists for an improved support system that allows the rider to ride a snow sports board in a seated, forward-facing position. The present disclosure addresses this need and others. In accordance with some embodiments, the rider can sit on a seat mounted on top of the assembly. The rider's legs can extend down with the knees somewhat bent along opposite sides of the suspension assembly's frame. In one example, the rider may place the knees on a platform or peg attached to the support frame. In another example, the rider may place the feet on a foot support attached to the board or on the board. In yet another example, the rider may ride in a seated position with the feet on the board below the seat. The riding position is similar and generally familiar to those who ride bicycles, motorcycles, or horses. Compared to a sit ski, the rider has enhanced control over the board and improved balance, due at least in part to the rider's athletic stance with a more upright and forward body position. Also, unlike other assemblies, some suspension assemblies of the present disclosure elevate the rider above the board in a seated position that enables the rider to transfer weight to the board for turning. In accordance with some embodiments, the rider's seated position is akin to being seated at the edge of a seat with the ability of the rider to apply weight the feet (or knees) as needed to shift weight to the board and/or to balance. Thus, some advantages of a suspension system in accordance with the present disclosure include the ability to ride a snow sports board in a face-forward position with the legs positioned below the rider.

While generally referred to herein as a suspension assembly for consistency and ease of understanding the present disclosure, the disclosed assembly is not limited to that specific terminology and alternatively can be referred to, for example, as a support assembly, a support and suspension system, or other terms. Additionally, while referred to herein as a snow sports board, the disclosed board is not limited to that specific terminology and alternatively can be referred to, for example, as a snowboard, a ski, a board, or other terminology. As will be further appreciated, the particular configuration (e.g., materials, dimensions, etc.) of the suspension assembly configured as described herein may be varied, for example, depending on whether the target application is for general recreational use, racing, or for a particular type of terrain. Numerous configurations will be apparent in light of this disclosure.

### STRUCTURE AND FUNCTION

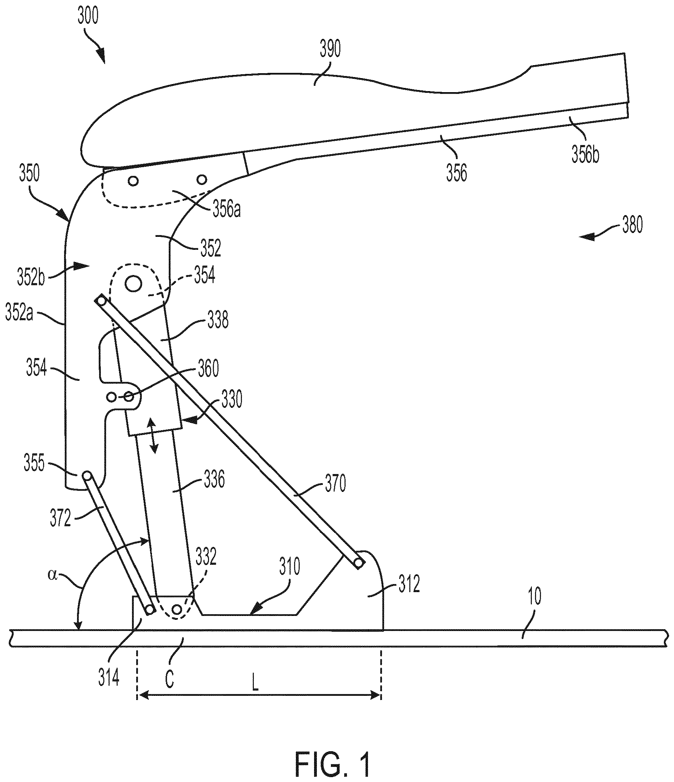

FIG. 1 illustrates a side view of a suspension assembly 300 mounted on a snow sports board 10, in accordance with an embodiment of the present invention. In some embodiments, the suspension assembly 300 includes a base 310 configured to be mounted to a snow sports board 10 (or simply "board"). In some embodiments, the base 310 has a length L comparable to that of a ski boot, snowboarding boot, or binding thereof. In some such embodiments, the base 310 is mounted over a center C of the snow sports board 10 so that the turning performance of the board 10 uses the same or similar portion of the board 10 and the weight of the rider is also generally centered over the board 10 during use. In one example, the base 310 is constructed to be received in a ski binding designed for a ski boot. The base 310 can include replicas of or otherwise simulate the heel and toe portions of a ski boot, with or without a continuous surface between the heel and toe portions. In some such embodiments, the base 310 can be secured to the snow sports board 10 via a ski boot binding mounted to the snow sports board 10.

In some embodiments, the base 310 includes a rear base portion 312 and a front base portion 314. As shown in FIG. 1, the rear base portion 312 and front base portion 314 can be connected or integrally made as a single component of the suspension assembly 300. In one example embodiment, the base 310 can be fastened to the board 10 using screws received in threaded holes in the board 10. Although FIG. 1 shows only a portion of the snow sports board 10, the snow sports board can be configured as a ski, snowboard, or other board with a length from 130 cm to 180 cm, for example. In other embodiments, the board has a longer or shorter length as desired or suitable for a particular use. The board 10 can be configured as a twin-tip board, freestyle board, powder board, race board, or other suitable configuration. Numerous variations and embodiments will be apparent in light of the present disclosure.

A shock absorber 330 has a lower end 332 attached to the front base portion 314. For example, the lower end 332 is bolted to the base 310 so that the shock absorber 330 can pivot about the bolt. An upper end 334 of the shock absorber 330 is pivotably attached to a frame 350. For example, the upper end 334 is bolted or otherwise secured to a body 352 of the frame 350. In some embodiments, the shock absorber 330 has a generally upright orientation, including defining an angle α with the board 10 with a range from 60-130°, including 80-100° and 70-110°, for example. In some embodiments, the shock absorber 330 is tilted forward at an angle from 60-90°, including 70-85° and 80-88°. The shock absorber 330 can be a pneumatic piston with a spring, a hydraulic piston with a spring, a spring shock absorber, or other shock absorber designed to absorb and damp shock impulses, such as bumps in the terrain or landing impact when riding the board 10. For example, the shock absorber 330 includes a piston 336 that is slidably received in a cylinder 338.

In accordance with one embodiment, the frame 350 includes a first portion 354 extending downwardly and a second portion 356 extending rearwardly from the first portion 354. In some embodiments, the frame 350 defines a body 352 between the first portion 354 and the second portion 356 of the frame 350. For example, the first portion 354, second portion 356, and body 352 generally define an inverted L shape, where the body 352 is located at a corner between the first and second portions 354, 356. The frame 350 can be connected to and supported at least in part by the shock absorber 330. In one embodiment, the body 352 is generally hollow and is attached to the upper end 334 of the shock absorber 330, which is received between lateral portions of the body 352. In one embodiment, the body 352 is made of metal and has a cross-sectional shape of a U, a rectangle, a circle or oval, a triangle, or other open or closed shape, as will be appreciated. In embodiments having a U-shaped cross-sectional shape, the body 352 may include a front panel 352a and opposed side panels 352b, where the upper end 334 of the shock absorber 330 is received between the opposed side panels 352b. The rear portion of the body 352 is open to permit the body 352 to pivot relative to the shock absorber 330.

In one embodiment, the first portion 354 of the frame 350 extends downwardly from the body 352 along the front and/or side portions. In some embodiments, the first portion 354 is continuous with and integral to the body 352. In other embodiments, the first portion 354 is a separate part that can be attached to the body 354. The first portion 354 can be configured with a mounting bracket 360 for a knee support platform, such as knee support 420. For example, the mounting bracket 360 is a tab or protrusion that extends generally horizontally and defines openings for fasteners. In some embodiments, the frame 350 includes two or more mounting brackets 360 along each side. The height of the knee support 420 above the board 10 and the vertical distance between the knee support 420 and the seat 390 can be modified by selecting the appropriate mounting location, as will be appreciated. Alternately, the frame may not specifically define mounting brackets 360, but instead defines mounting openings to define one or more locations to attach knee support 420. In one embodiment, the mounting bracket 360 permits adjustable tilt of the knee support 420. For example, a rearward end of plates 421 of the knee support 420 has an adjustable height above the board 10, thereby permitting the rider 500 to adjust the angle of the plate(s) 421 with respect to the board 10. In some such embodiments, the rider 500 may desire to release the rearward end of the plate(s) 421 for boarding a chairlift, such as by releasing a catch on the mounting bracket 360. When the rider 500 is ready to ride, the rearward end of the plate(s) 421 can then be raised and locked in place by re-engaging the catch on the mounting bracket 360. Numerous variations and embodiments will be apparent in light of the present disclosure.

The second portion 356 of the frame 350 defines a support or seat beam that extends along a bottom of a seat 390, in accordance with some embodiments. The second portion 356 has a forward end portion 356a and a rearward end portion 356b. For example, the second portion 356 is configured as a cantilever that extends rearwardly over the board 10 a distance of 16-20 inches (40-50 centimeters), and provides cantilevered support to the seat 390. In some embodiments, the second portion 356 can be continuous with and integral to the body 352. In other embodiments, the second portion 356 of the frame 350 can be a separate component that is attached to the body. In one example embodiment, the forward end portion 356a of the second portion 356 of the frame 350 can be removably attached to the body 352 using bolts or other suitable fastener. In some embodiments, the second portion 356 of the frame 350 defines an open region 380 below the seat 390 that is configured and sized to receive the seat of a chairlift or equivalent.

In some example embodiments, the second portion 356 of the frame 350 is elevated above each knee plate 421 by about 6-9 inches (15-23 cm), such as about 7.5 inches (19 cm). In one such embodiment, the rearward end portion 356b of the second portion 356 of the frame 350 is about 16 inches (40 cm) or more above the ground to provide clearance to receive a chairlift seat 602 when no rider is on the assembly. The second portion 356 extends about 15 inches (38 cm) from the first portion 354 of the frame. For example, the open region 380 has a length from the rearward end portion 356b to the body 352 of the frame 350 of about 12 to 18 inches (30-45 cm), including the subrange of 14-16 inches (35-41 cm), about 15 inches (38 cm), or other suitable length comparable to or appropriate for the size of a chairlift seat 602.

In some embodiments, the second portion 356 of the body 352 has a height above the board 10 sufficient to receive the chairlift seat 602 below it when the shock absorber is in an active-use state. For example, chairlift seats may be between 16 and 22 inches (40-56 cm) above the ground. Accordingly, in some embodiments, the bottom of the second portion 356 is at least that height above the ground when the suspension assembly 300 is mounted to a board 10. In other embodiments, the rearward end of the second portion of the frame is at least 16 inches (40 cm) above the board 10, such as from 16 to 22 inches (40-56 cm) above the board 10, including 16-18 inches (40-46 cm), 16-20 inches (40-50 cm), 18-20 inches (45-50 cm), and 18-22 inches (45-56 cm). When the rider is seated on the seat 390 in a resting or stationary position for the board 10, the shock absorber typically will compress to some extent, referred to as sag. Accordingly, in some embodiments, the rearward end portion 356b of the second portion 356 of the frame 350 is from 16 to 22 inches (40-56 cm) above the board 10, inclusive of sag in an amount up to 3 inches (7.5 cm) (e.g., 1-3 inches or 2.5-7.5 cm), up to 4 inches (10 cm) (e.g., 2-4 inches or 5-10 cm), or up to 5 inches (13 cm) (e.g., 2-5 inches or 5-13 cm) of sag when the rider is seated on the seat 390 and/or kneeling on the knee support 420. Numerous variations and embodiments will be apparent in light of the present disclosure.

A first linkage 370 connects the body 352 to the rear base portion 312. A second linkage 372 connects the bottom end 355 of the frame 350 to the front base portion 314. The first linkage 370 and second linkage 372 extend between the frame 350 and the base 310 to provide torsional stability and limit the range of motion of the seat 390 in response to compressing or extending the shock absorber 330. In one example, the first linkage 370 extends upward and forward at an angle of about 45° from the base 310 to the frame body 352 and attaches adjacent the upper end 334 of the shock absorber 330. The second linkage 372 extends upward and forward to the bottom end 355 of the frame 350 at an angle of about 60°. In one embodiment, each of the first linkage 370 and the second linkage 372 can include a pair of rods extending in parallel. For torsional stability, the rods can be connected along much of their lengths by a plate to approximately define an H shape. In other embodiments, the first linkage 370 and the second linkage 372 include a single rod that connects to the frame 350 and the base 310 at a single point or at two points using a yoke or forked end, for example. Numerous variations and embodiments will be apparent in light of the present disclosure.

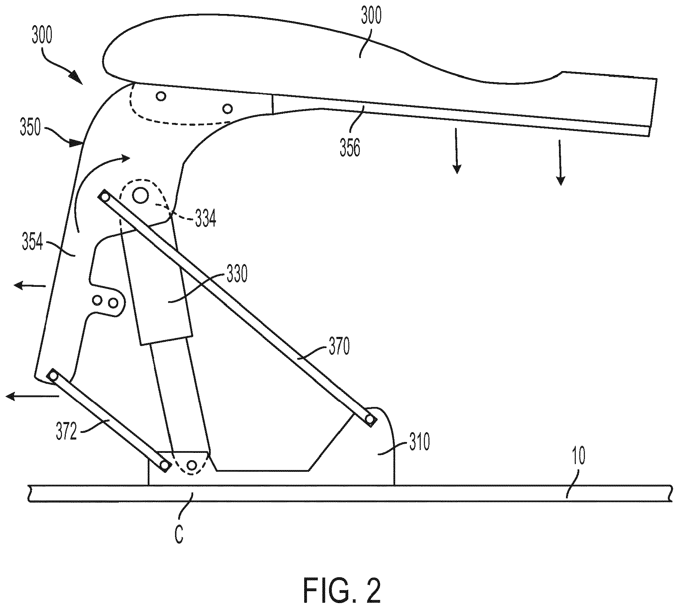

FIG. 2 illustrates a side view of the suspension assembly 300 of FIG. 1, showing the shock absorber 330 in a compressed state as the result of a downward load applied to the seat 390. The first linkage 370 and second linkage 372 resist twisting and leaning of the suspension assembly 300 with respect to the base 310. The first and second linkages 370, 372 also substantially limit movement of the seat 390 to be forward-backwards or up-down along a vertical plane extending upward from the board 10 (rather than laterally or torsionally with respect to the board) when the shock absorber 330 is compressed or extended. That is, when a downward load is applied to the seat 390, the frame pivots about the upper end 334 of the shock absorber 330. The second linkage 372 limits upward movement of the first portion 354 of the frame 350 when the frame 350 pivots about the upper end 334 of the shock absorber 330 during compression of the shock absorber 330. As such, a downward force on the seat 390 compresses the shock absorber 330 with the second portion 356 of the body 352 acting as a lever handle. For example, a downward force on the seat 390, such as the rider's weight, compresses the shock absorber 330 and pivots the frame 350 downward and forward about the upper end 334 of the shock absorber 330 so that the downwardly-extending first portion 354 of the frame pivots forward. Since movement of the frame 350 is restricted by the first and second linkages 370, 372, the first portion 354 of the frame 350 tends to rotate forward when the shock absorber 330 is compressed downward along the axis of the shock absorber 330. For example, a downward force on the seat 390 causes the seat to translate downward along the path of the shock absorber 330 while also rotating about the connection at the upper end 334 of the shock absorber 330. Such action substantially maintains the weight of the rider over the center C of the board 10, in accordance with some embodiments.

The frame 350 and seat 390 can be constructed to have a narrow, moderate, or relatively wide size between the rider's knees. In a kneeling position on the knee support 420, a wider spacing between the knees provides a stable stance from which the rider can balance and control the board 10, as will be appreciated. When sitting on the seat 390, the rider may squeeze the frame 350 between the knees for control and stability. For example, the frame 350 has a lateral width (between side panels 352b or measured as seat width) from 4 to 16 inches (10 to 40 cm) or other suitable width. In some embodiments, the rider's knees 502 are spaced by the frame 350 and/or seat 390 having a lateral thickness of at least 4 inches (10 cm), including at least 6 inches (15 cm), at least 8 inches (20 cm), at least 10 inches (25 cm), at least 12 inches (30 cm), or at least 14 inches (35 cm). In other embodiments, the frame 350 and/or seat 390 has a lateral thickness between the rider's knees 502 from 4-12 inches (10-30 cm), 4-8 inches (10-20 cm), 6-10 inches (15-25 cm), 6-12 inches (15-30 cm), 8-12 inches (20-30 cm), or 8-16 inches (20-40 cm). Numerous variations and embodiments will be apparent in light of the present disclosure. The rider's feet 504 may be positioned close together, approximately defining a tripod stance with the knees 502, or spaced apart to define a four-point stance with the knees 302.

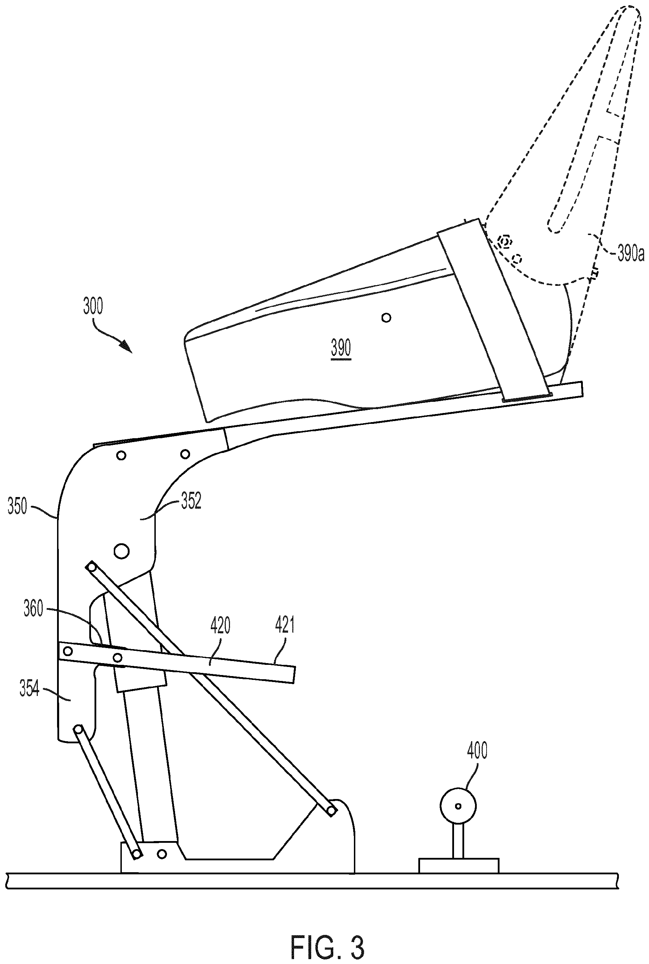

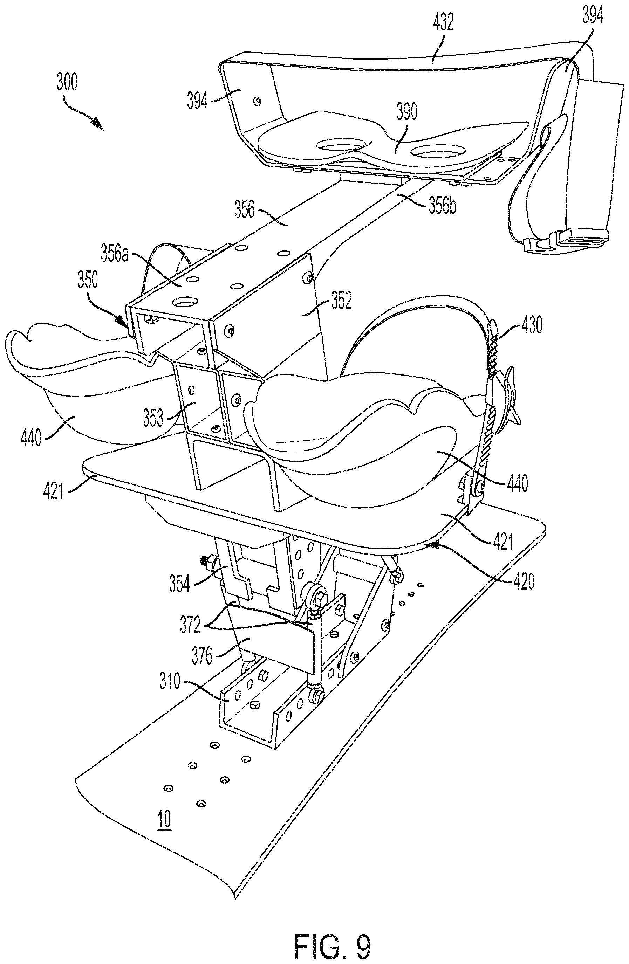

Referring now to FIG. 3, a side view illustrates a suspension assembly 300 equipped with a bucket-style seat 390 and with the addition of a knee support 420 secured to the second portion 354 of the frame 350. In this embodiment, the seat 390 has a bucket-style configuration to support and retain the rider. In such a configuration, the sides of the seat 390 function similarly to hip plates 394 (shown e.g., in FIG. 9) to retain the rider and transfer the rider's weight to the board. Compared to the seat of FIGS. 1-2 or FIG. 4, for example, the bucket-style seat 390 in FIG. 3 has a higher back portion that may extend approximately to the rider's lower back. Optionally, the seat 390 includes a back rest 390a that extends part way up the rider's back. The position of the back rest 390a can be adjusted for the desired incline. Also, in some embodiments, the bucket-style seat 390 can be oriented to support and retain riders who may not have use of their abdominal muscles, for example. One such embodiment includes the back rest 390a and the seat is oriented so that the base of the seat places the rider's knees at approximately the same elevation above the board 10 as the rider's hips. Numerous variations and embodiments will be apparent in light of the present disclosure.

In one embodiment, the knee support 420 includes left and right plates 421 that connect to the frame 350 using the mounting brackets 360. The plates of the knee support 420 can be sized to accommodate the rider's knee and/or shin, for example. In other embodiments, the knee support 420 is a peg or bar that extends laterally from the frame 350. In some such embodiments, the rider may use a shin guard 440 or other accessory to distribute the rider's weight on the relatively small area of the peg. In some embodiments, the knee support 420 has a fixed position and extends laterally from the frame 350. In other embodiments, the knee support 420 can be folded up along the side panels 352b of the body 350. Thus, when not in use, such as when the rider prepares to board a chairlift or when the suspension assembly 300 is being transported, the plates 421 can be folded up along each side of the frame body 352. Embodiments of the suspension assembly 300 with the knee support 420 can include or omit the foot support 400.

The embodiment of FIG. 3 also includes an optional foot support 400. In some embodiments, the foot support 400 includes lateral bars that are configured to contact the top or front of the rider's ankles, such as when the rider's toes tuck behind the bars. In another embodiment, the foot support 400 can be configured to contact the soles of the rider's boots, such as at the toe region, middle region, or heel region. In some embodiments as shown, the foot support is separate from the suspension assembly 300.

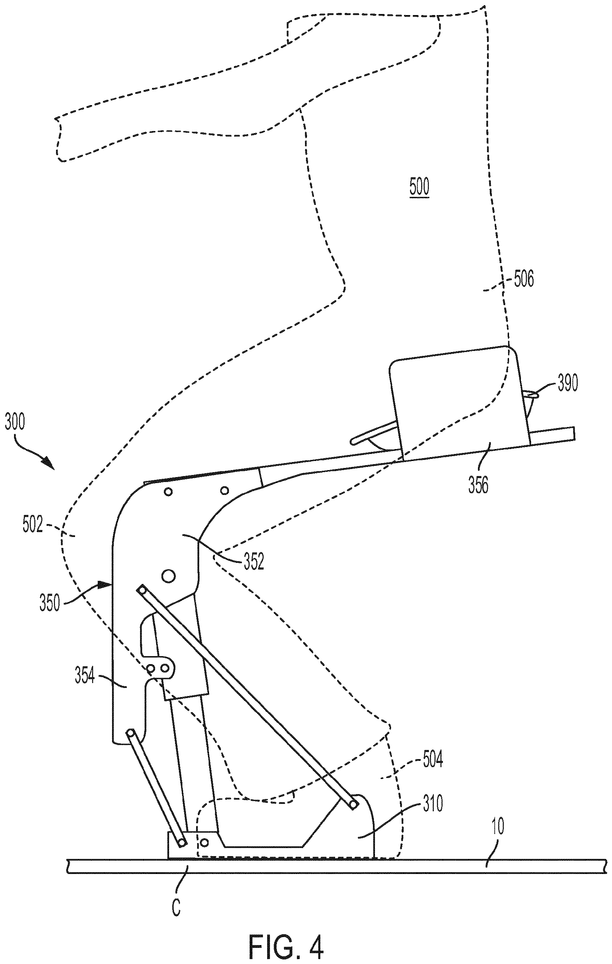

FIG. 4 illustrates a side view showing an example riding position for the suspension assembly 300 of FIG. 1, in accordance with some embodiments. In this example, the seat 390 has a rowing-style configuration. Hip plates 356 extend upward along the sides of the seat 390 to help the rider 500 transfer weight to the board 10 for turns. Other embodiments and configurations of the seat 390 are also acceptable. The rider 500 is seated on the seat 390 with knees 502 bent and feet 504 on the board 10 alongside the base 310. Note that the rider's knees 502 are vertically below and forward of the rider's hips 506. In such a position, the rider 500 can squeeze the assembly 300 between the knees 502. In addition, the rider 500 can assume a standing position to raise off of the seat 390, such as in anticipation of a bump or jump. The rider can lean forward or backward to shift weight across the center C of the board 10 and also can lean to the side to transfer weight to an edge of the board 10 to initiate and make a turn. Note that the rider's knee 502 is positioned at or near the attachment point between the frame 350 and the shock absorber 330. As such, pivot of the frame 350 about the upper end 334 of the shock absorber 330 is consistent with bending at the knee 502. Note also that the back of the rider's knee 502 is positioned at or near where the second portion 356 attaches to the body 352 of the frame 350.

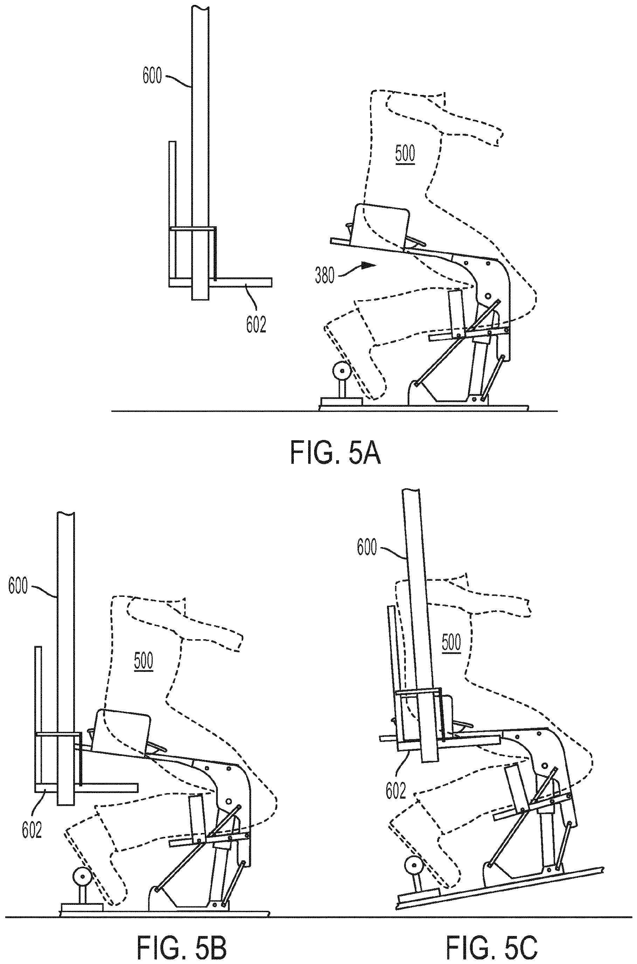

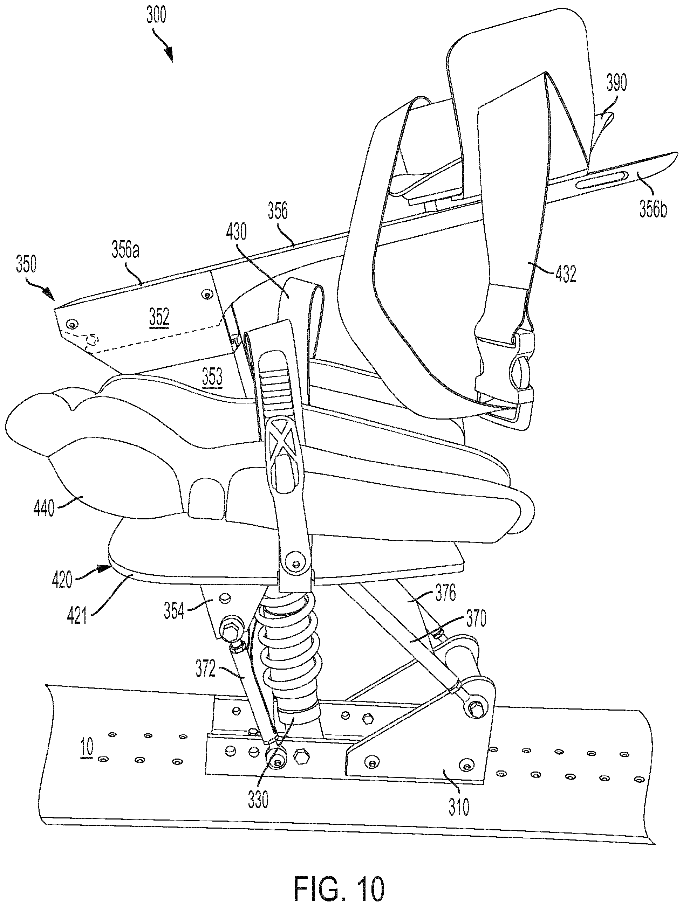

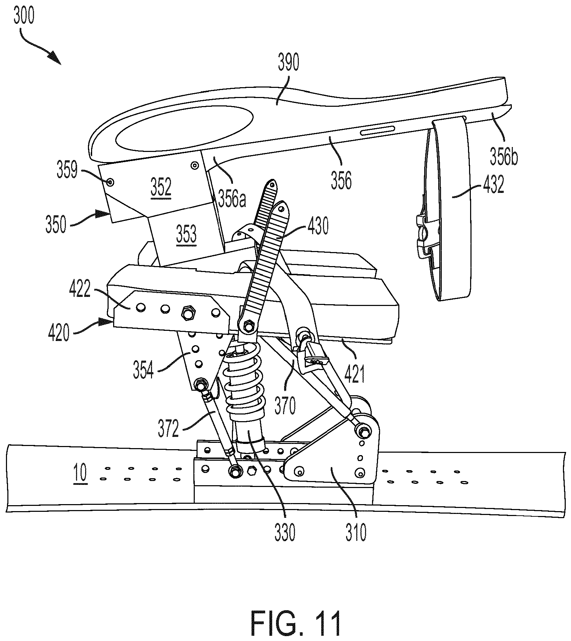

FIGS. 5A-5C show a sequence of a rider 500 boarding a chairlift 600 while using the suspension assembly 300 attached to a snow sports board 10, in accordance with an embodiment of the present disclosure. When boarding a chairlift, 600 for example, the chairlift seat 602 can be received in the open area 380 under the seat 390 and second portion 356 of the suspension assembly 300 while the suspension assembly 300 is in an active-use position, such as shown in FIG. 5A. As the chairlift seat 602 engages the suspension assembly 300, the rider 500 can remain seated or optionally may stand to provide clearance, such as shown in FIG. 5B. As the chairlift 600 lifts up to carry the rider 500 up the hill, the second portion 356 is retained on the chairlift seat 602 with the rider 500 seated on the seat 390, such as shown in FIG. 5C. The rearward end portion 356b of the second portion 356 can extend through the chair back as needed so that the rider 500 can sit on the seat 390 with the knees 502 bent at or near the edge of the chairlift seat as is done in skiing, for example. Optionally, a seatbelt or waist strap 432 (shown, e.g., in FIGS. 10 and 11) can be secured to the frame 350 and wrap around the rider's waist and hips 506, where the rider 500 remains in a seated position while boarding the chairlift 600.

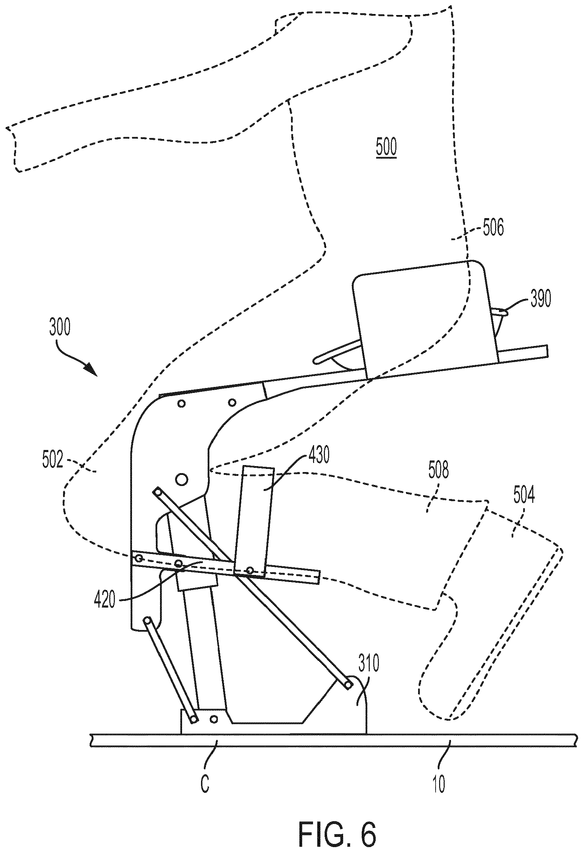

FIG. 6 illustrates a side view showing an example of an active-use position for the suspension assembly 300 with knee supports 420, in accordance with an embodiment of the present invention. Here, the rider's knees 502 and part of the shins or lower legs 508 are on the knee support 420 and the rider's feet 504 are elevated above the board 10. Similar to the position described with reference to FIG. 4, the rider's knees 502 are vertically below and forward of the rider's hips 506, enabling the rider 500 to more easily transfer weight to the board 10 for turning. The rider 500 can squeeze the frame 350 between the legs and knees 502, if needed or desired. Optionally, a leg strap 430 can be secured to the knee support 420 and wrap over the back of the rider's lower leg 508 to secure the rider 500 to the suspension assembly 300.

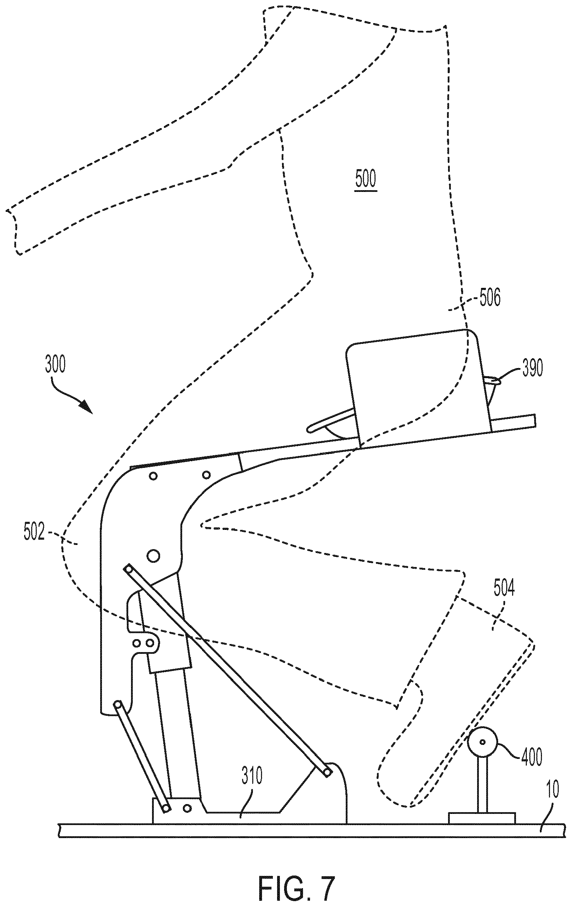

FIG. 7 illustrates a side view showing an example of an active-use position of a suspension assembly 300 configured with a foot support 400, in accordance with an embodiment of the present disclosure. Here, the suspension assembly 300 does not include the knee support 420 and the rider 500 may move the feet 504 between the board 10 and the foot support 400 as needed for comfort and/or control of the board 10. For example, the rider 500 can move the feet 504 to be alongside the base 310 in a sitting position or to assume a standing or squatting position. The rider 500 may also move the feet 504 to the foot support 400, such as to lean forward or as a general riding position. As with other embodiments, the rider 500 can use the legs to lift above the seat 390, such as to absorb bumps.

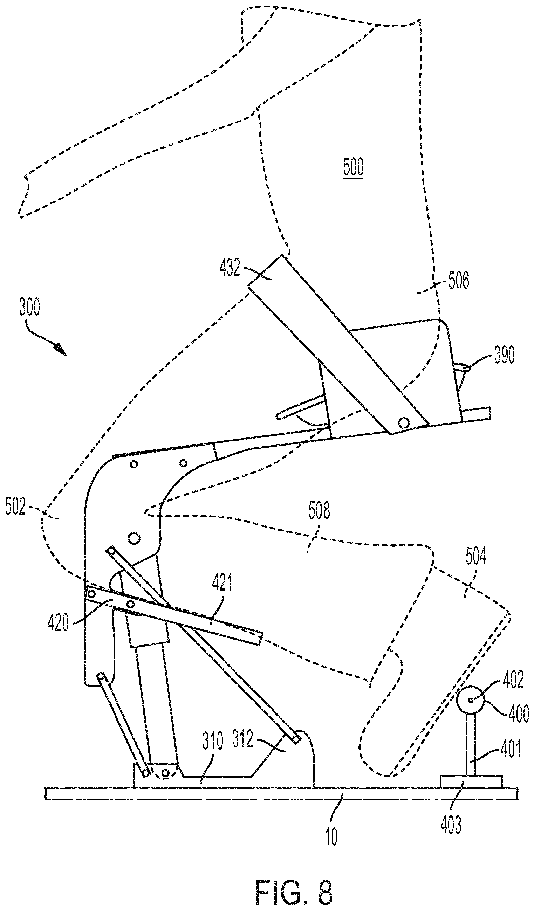

FIG. 8 illustrates a side view showing an example active-use position for a suspension assembly 300 with foot support 400 and knee support 420, in accordance with an embodiment of the present disclosure. Here, the rider 500 has knees 502 and lower legs 508 supported by the knee support 420, which is shown as a pair of plates 421 in this example embodiment. Note that the plates 421 extend in an upward direction and the seat 309 extends downward forward the front of the board 10, consistent with the rider's shape.

The rider's feet 504 engage the foot support 400, which is mounted to the board 10 behind the base 310 in this example. For example, the post 401 is retained on the board by a base plate 403 or the like. In other embodiments, the foot support 400 may be attached to or be part of the rear base portion 312 or other portion of the base 310. The rider 500 can remain in a seated position (with optional waist strap 232 in some instances), can assume either a high kneeling position on the knee supports 420, or can assume a temporary squat/standing position using the foot support 400, in accordance with some embodiments. Here, the foot support 400 includes an upright post 401 and cross piece 402 that defines left and right foot positions.

FIGS. 9 and 10 illustrate a front perspective view and a side view, respectively, of a suspension assembly 300 with a rowing-style seat 390 and a knee support 302, in accordance with an embodiment of the present invention. The seat 390 is attached to the top of the rearward end portion 356b of the second portion 356 of the frame 350. An optional waist strap 432 is attached to hip plates 394, which extend upward from opposite lateral sides of the seat 390. Optionally, the waist strap 232 can attach to the second portion 356 of the frame 350. In this example embodiment, the second portion 356 and body 352 of the frame 350 are constructed from a U-channel member of aluminum or steel, for example. The forward end portion 356a of the second portion 356 of the frame 350 is received in a channel defined in the body 352. Using suitable fasteners, the second portion 356 can be removed and installed as needed. For example, pins with spring ball plungers can be used for quick removal and installation of the second portion 356, as will be appreciated. The body 352 is elevated above the first portion 354 by a riser 353. In some embodiments, the riser 353 is an optional attachment to the frame 350 that can be used to change the vertical distance between the knee support 420 and the seat 390 as desired for a particular rider 500. In some embodiments, the riser 353 is omitted and the body 353 is formed as one piece with the first portion 354 of the frame 350. In yet other embodiments, risers 353 can be configured with various dimensions to accommodate a customized seat height. The knee support 420 is configured as a pair of plates 421 with upwardly extending sides 422 to assist in preventing the rider's knee 502 from sliding laterally off the knee support 420.

The knee support 420 includes a pair of support plates 421, each mounted on opposite sides of the frame 350 and including a leg strap 430, which can be connected together to secure the rider to the suspension assembly 300. In some embodiments, the knee support 420 can be shaped to mate with the contour of the rider's lower leg 408. In one such embodiment, the knee support 420 includes shin guards 440 as a separate component worn by the rider 500. In another such embodiment, the shin guards 440 or the like are secured to the support plates 421. The first and second linkages 370, 372 include parallel rods 374 connected by a plate 376 fixedly attached to the rods 374, such as by welding. The shock absorber 330 is connected to the base 310 using a bolt through the lower end 332 of the shock absorber 330. Numerous variations and embodiments will be apparent in light of the present disclosure.

FIG. 11 illustrates a side view of a suspension assembly 300 with padded knee support 420, in accordance with another embodiment of the present invention. In this example, each plate 421 of the knee support 420 includes a pad 423 for the rider's comfort. The pad 423 is retained in part on the plate 421 by sides 422 that extend upward from the plate 421. The pad 423 can be made of foam rubber or other suitable material, as will be appreciated. A riser block 353 is secured between the upper end of the second portion 354 and the body 352 of the frame 350. The forward end portion 356a is slidably received in a U-shaped channel defined by the body 352 and secured therein using fasteners 359. As noted above, the second portion 356 can be configured for rapid removal from and installation on the frame 350, as will be appreciated. A waist strap 432 is secured to the second portion 356 of the frame 350 and a seat 390 is attached on top of the second portion 356.

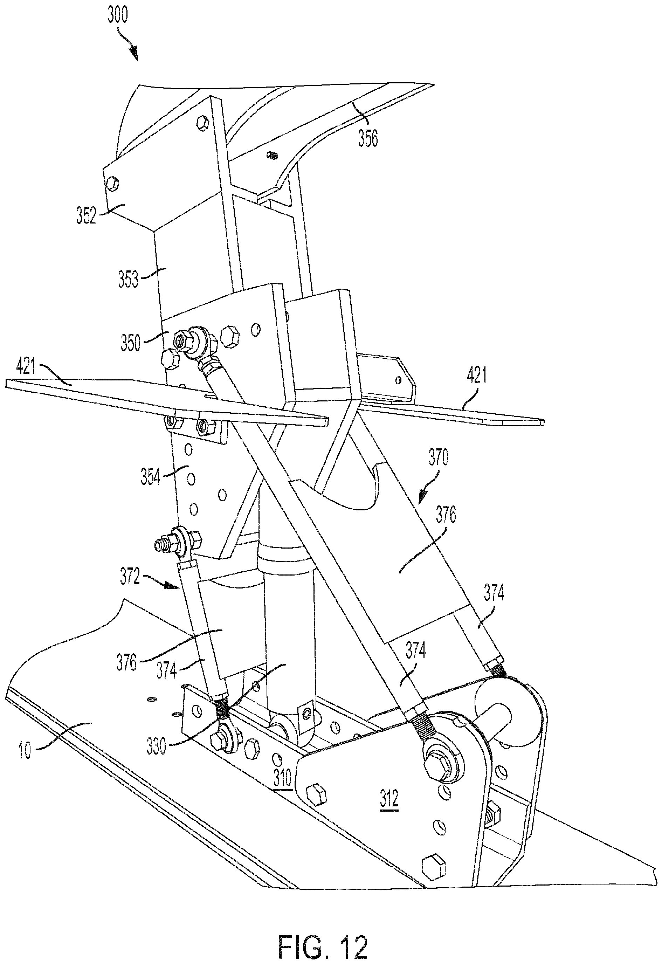

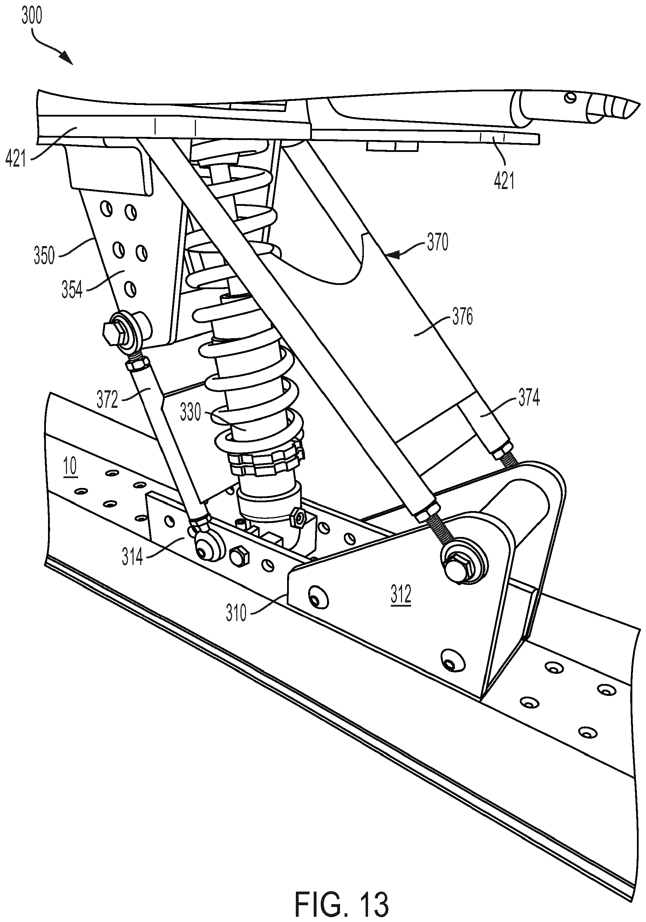

FIGS. 12 and 13 illustrate a rear perspective views of part of a suspension assembly 300 attached to a board 10, in accordance with some embodiments of the present invention. The suspension assembly 300 includes a shock absorber 330 connected between the base 310 and the frame 350. The first linkage 370 includes rods 374 that extend between the rear base portion 312 and the frame 350. A plate 376 connected between the rods 374 reduces or prevent both twisting of the frame 350 and movement of the assembly towards the sides of the board 10. The second linkage 372 is similarly constructed and connects between the front base portion 314 and the first portion 354 of the frame 350. Plates 421 are connected to opposite sides of the frame 350, providing a support platform for each of the rider's knees 502 and lower legs 508 (shown, e.g., in FIG. 6).

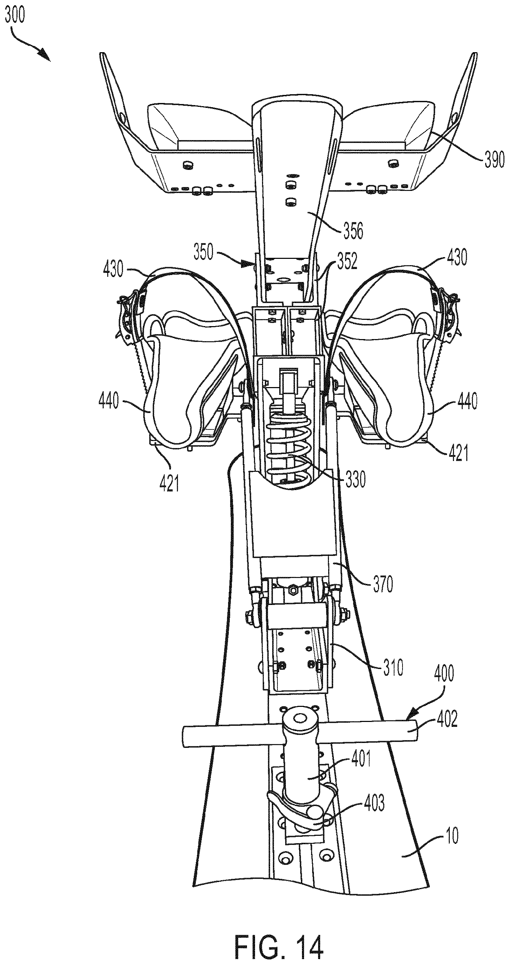

FIG. 14 illustrates a rear view of a suspension assembly 300 with a seat 390 and knee support 440, in accordance with an embodiment of the present invention. In this example, each plate 421 includes a shin guard 440 that is shaped to conform to the rider's lower leg 508. The shin guard 440 is secured to the plate 421 in some embodiments. As can be seen in FIG. 14, the seat 390 and the knee support 420 both extend laterally beyond the board 10. As such, when using the optional foot support 400, the rider 500 can achieve a tripod-like stance with the knees 502 extending over the sides of the board 10 and the feet 504 engaging the foot support 400, which is secured along the center of the board 10. The rider 500 can use these features for balanced and stable athletic stance on the suspension assembly 300 and to transfer weight to edges of the board 10 for turning.

In use, a suspension assembly 300 as variously described herein can provide a way to traverse packed or loose snow in a way that is different from both skiing and snowboarding. In accordance with some embodiments, the suspension assembly 300 provides a seat 390 with hip plates 394 or other barrier (e.g., waist strap 432) that the rider 500 can use to help transfer weight to the board 10. For example, when the rider 500 leans the torso to one side of the board 10, the rider 500 leans against the hip plates 394 and/or a waist strap 432, thereby transferring weight to the edge of the board 10 for turning. In other embodiments, the suspension assembly 300 can be equipped with a bucket-style seat as may be suitable for the adaptive community. In accordance with some embodiments, a knee support 420 can be shaped to restrain the rider's lower leg 508 from sliding off of the plate 421. For example, the knee support 420 includes shin guards 440, a plate 421 with a concave shape, a knee plate 421 with sides 422, or a combination of such features. By engaging one or more of these features with the rider's lower leg 508, the rider 500 can efficiently shift weight to the board 10 for turning and control, for example. The combination of a seat 390 with hip plates 394 and a contoured knee support 420 can eliminate the need to secure the rider's ankles/feet 504 and lower leg 508, in accordance with some embodiments. Instead, the rider 500 can use only a waist strap 432 to secure the rider 500 to the suspension assembly 300. Numerous variations and embodiments will be apparent in light of the present disclosure; rev

The foregoing description of example embodiments has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future-filed applications claiming priority to this application may claim the disclosed subject matter in a different manner and generally may include any set of one or more limitations as variously disclosed or otherwise demonstrated herein.

## Claims

1. A suspension assembly (300) for use with a snow sports board (10), the assembly comprising:
a frame (350) having a first portion (354) extending downward and a second portion (356) extending rearward from the first portion (354);
a base (310) configured to be attached to a snow sports board (10);
a seat (390) on the second portion (356) of the frame (350); and
a shock absorber (330) connected between the base (310) and the first portion (354) of the frame (350);
wherein the suspension assembly (300) is configured to support a rider (500) in a seated, face-forward position with knees (502) of the rider vertically below and forward of hips (506) of the rider and feet (504) of the rider below the seat (390), and
**characterised in that** the suspension assembly further comprises a knee support attached to the first portion (354) of the frame.

2. The suspension assembly of claim 1, wherein the frame (350) generally defines an L shape with the first portion (354) orthogonal to the second portion (356), wherein the frame (350) can pivot about an upper end (334) of the shock absorber (330).

3. The suspension assembly (300) of claim 1 or 2 further comprising
a first linkage (370) connected between the first portion (354) of the frame (350) and a rear-end portion (312) of the base (310); and
a second linkage (372) connected between the first portion (354) of the frame (350) and a front-end portion (314) of the base (310);
wherein the first linkage (370) and the second linkage (372) each extends upward and forward from the base (310) to the first portion of the frame.

4. The suspension assembly (300) of any of claims 1-3, wherein the suspension assembly can be mounted on a snow sports board (10) such that the seat (390) is cantilevered above a rear portion of the snow sports board (10), thereby defining an open region (380) that is below the second portion (356) of the frame (350) and rearward of the shock absorber (330).

5. The suspension assembly (300) of any of claims 1-4, wherein the base (310) can be mounted on a snow sports board (10) such that a rearward end (356b) of the second portion (356) of the frame (350) is at least 40 centimeters above the snow sports board (10).

6. The suspension assembly (300) of claim 5, wherein the base (310) can be mounted on the snow sports board (10) such that the rearward end (356b) is at least 40 centimeters above the snow sports board (10) and including up to 10 centimeters of sag in the shock absorber (330) resulting from a rider (500) seated on the seat (390).

7. The suspension assembly (300) of any of claims 1-6, wherein the knee support comprises one or more knee plates (421) attached to opposite sides of the frame (350) and extending laterally outward from the frame (350).

8. The suspension assembly of claim 7 wherein the frame (350) includes two or more mounting brackets along each side and wherein the knee support (420) includes left and right plates (421) that connect to the frame (350) using the mounting brackets.

9. The suspension assembly (300) of claim 7 or 8, wherein each of the one or more knee plates (421) is configured to fold against the first portion of the frame (350).

10. The suspension assembly (300) of any of the preceding claims, wherein the knee support is (420) contoured to mate with a lower leg of the rider.

11. The suspension assembly (300) of any of the preceding claims, wherein the knee support (420) each has an adjustable tilt.

12. The suspension assembly (300) of any of claims 1-11 further comprising a foot support (400) configured to be attached to the base (310) or to the snow sports board (10) behind the base (310).

13. The suspension assembly of any of claims 1-12, wherein the frame (350) pivots about an upper end (334) of the shock absorber (330) when the shock absorber (330) is compressed.

14. The suspension assembly of any of claims 1-13, wherein the second portion (356) of the frame (350) is removably attached to the first portion (354) of the frame.

15. The suspension assembly of claim 1, wherein the seat (390) includes a bottom portion and hip plates (394) extending upward from opposite sides of the bottom portion.

## Patentansprüche

1. Aufhängungsanordnung (300) für ein Schneesportbrett (10), wobei die Anordnung umfasst:
einen Rahmen (350) mit einem ersten Abschnitt (354), der sich nach unten erstreckt, und einem zweiten Abschnitt (356), der sich vom ersten Abschnitt (354) nach hinten erstreckt;
eine Basis (310), die konfiguriert ist, um an einem Schneesportbrett (10) befestigt zu werden;
einen Sitz (390) auf dem zweiten Teil (356) des Rahmens (350); und
einen Stoßdämpfer (330), der zwischen der Basis (310) und dem ersten Teil (354) des Rahmens (350) verbunden ist;
wobei die Aufhängungsanordnung (300) konfiguriert ist, um einen Fahrer (500) in einer sitzenden, nach vorne gerichteten Position zu stützen, wobei die Knie (502) des Fahrers vertikal unter und vor den Hüften (506) des Fahrers und die Füße (504) des Fahrers unter dem Sitz (390) liegen,
**dadurch gekennzeichnet, dass** die Aufhängungsanordnung ferner eine Kniestütze der an dem ersten Abschnitt (354) angebracht ist, umfasst.

2. Aufhängungsanordnung nach Anspruch 1, wobei der Rahmen (350) im Allgemeinen eine umgekehrte L-Form,, mit dem ersten Abschnitt (354) senkrecht zu dem zweiten Abschnitt (356) definiert, wobei der Rahmen (350) um ein oberes Ende (334) des Stoßdämpfers (330) schwenken kann.

3. Aufhängungsanordnung nach Anspruch 1 oder 2, ferner umfassend eine erste Verbindung (370), die zwischen dem ersten Teil (354) des Rahmens (350) und einem hinteren Teil (312) der Basis (310) verbunden ist; und
eine zweite Verbindung (372), die zwischen dem ersten Teil (354) des Rahmens (350) und einem vorderen Teil (314) der Basis (310) verbunden ist;
wobei sich die erste Verbindung (370) und die zweite Verbindung (372) jeweils von der Basis (310) nach oben und nach vorne zum ersten Teil des Rahmens erstrecken.

4. Aufhängungsanordnung (300) nach einem der Ansprüche 1 bis 3, wobei, die Aufhängungsanordnung auf einem Schneesportbrett (310) derart montiert werden kann, dass der Sitz (390) über einem hinteren Abschnitt des Schneesportbretts (310) freitragend ist, wodurch ein offener Bereich (380) definiert wird, der unter dem zweiten Teil (356) des Rahmens (350) und hinter dem Stoßdämpfer (330) liegt.

5. Aufhängungsanordnung (300) nach einem der Ansprüche 1 bis 4, wobei die Basis (310) auf einem Schneesportbrett (310) derart montiert werden kann, dass sich ein hinteres Ende (356b) des zweiten Abschnitts (356) des Rahmens (350) mindestens 40 cm über dem Schneesportbrett (10) befindet.

6. Aufhängungsanordnung (300) nach Anspruch 5, wobei die Basis (310) auf einem Schneesportbrett (310) derart montiert werden kann, dass sich das hintere Ende mindestens 40 Zentimeter über dem Schneesportbrett (10) befindet, und bis zu 10 Zentimeter Durchhang, resultierend von einem Fahrer (500) der auf dem Sitz (390) sitzt, in den Stoßdämpfer (330) hat.

7. Aufhängungsanordnung (300) nach einem der Ansprüche 1 bis 6, wobei die Kniestütze eine oder mehr Knieplatten (421) umfasst, die an gegenüberliegenden Seiten des Rahmens (350) angebracht sind und sich seitlich vom Rahmen (350) nach außen erstrecken.

8. Aufhängungsanordnung nach Anspruch 7, wobei der Rahmen (350) zwei oder mehr Montagehalterungen entlang jeder Seite umfasst und wobei die Kniestütze (420) linke und rechte Platten (421) umfasst die über die Montagehalterungen mit dem Rahmen (350) verbunden werden.

9. Aufhängungsanordnung (300) nach Anspruch 7 oder 8, wobei jede der einen oder mehreren Knieplatten (421) konfiguriert ist, um gegen den ersten Abschnitt des Rahmens (350) zu falten.

10. Aufhängungsanordnung (300) nach einem der vorhergehenden Ansprüche, wobei die Kniestütze (420) so konturiert ist, dass sie mit einem Unterschenkel des Fahrers zusammenpasst.

11. Aufhängungsanordnung (300) nach einem der vorhergehenden Ansprüche, wobei die Kniestütze (420) eine einstellbare Neigung aufweist.

12. Aufhängungsanordnung (300) nach einem der Ansprüche 1 bis 11, ferner umfassend eine Fußstütze (400), die konfiguriert ist, um an der Basis (310) oder an dem Schneesportbrett 10) hinter der Basis (310) angebracht zu werden.

13. Aufhängungsanordnung nach einem der Ansprüche 1 bis 12, wobei der Rahmen (350) um ein oberes Ende (334) des Stoßdämpfers (330) schwenkt, wenn der Stoßdämpfer (330) zusammengedrückt wird.

14. Aufhängungsanordnung nach einem der Ansprüche 1 bis 13, wobei der zweite Teil (356) des Rahmens (350) entfernbar an dem ersten Teil (354) des Rahmens angebracht ist.

15. Aufhängungsanordnung nach Anspruch 1, wobei der Sitz (390) einen Bodenabschnitt und Hüftplatten (394) umfasst, die sich von gegenüberliegenden Seiten des Bodenabschnitts nach oben erstrecken.

## Revendications

1. Ensemble de suspension (300) à utiliser avec une planche de sports de neige (10), l'ensemble comprenant :
un cadre (350) ayant une première partie (354) s'étendant vers le bas et une seconde partie (356) s'étendant vers l'arrière à partir de la première partie (354) ;
une base (310) configurée pour être fixée à une planche de sports de neige (10) ;
un siège (390) sur la seconde partie (356) du cadre (350) ; et
un amortisseur (330) connecté entre la base (310) et la première partie (354) du cadre (350) ;
dans lequel l'ensemble de suspension (300) est configuré pour supporter un utilisateur (500) dans une position assise, face vers l'avant avec les genoux (502) de l'utilisateur verticalement en dessous et en avant des hanches (506) de l'utilisateur et les pieds (504) de l'utilisateur sous le siège (390), et
**caractérisé en ce que** l'ensemble de suspension comprend en outre un support de genou fixé à la première partie (354) du cadre.

2. Ensemble de suspension selon la revendication 1, dans lequel le cadre (350) définit généralement une forme en L avec la première partie (354) orthogonale à la seconde partie (356), dans lequel le cadre (350) peut pivoter autour d'une extrémité supérieure (334) de l'amortisseur (330).

3. Ensemble de suspension (300) selon la revendication 1 ou 2, comprenant en outre
une première liaison (370) connectée entre la première partie (354) du cadre (350) et une partie d'extrémité arrière (312) de la base (310) ; et
une deuxième liaison (372) connectée entre la première partie (354) du cadre (350) et une partie d'extrémité avant (314) de la base (310) ;
dans lequel la première liaison (370) et la deuxième liaison (372) s'étendent chacune vers le haut et vers l'avant de la base (310) à la première partie du cadre.

4. Ensemble de suspension (300) selon l'une quelconque des revendications 1 à 3, dans lequel l'ensemble de suspension peut être monté sur une planche de sports de neige (10) de telle sorte que le siège (390) est en porte-à-faux au-dessus d'une partie arrière de la planche de sports de neige (10), définissant ainsi une région ouverte (380) qui est en dessous de la seconde partie (356) du cadre (350) et en arrière de l'amortisseur (330).

5. Ensemble de suspension (300) selon l'une quelconque des revendications 1 à 4, dans lequel la base (310) peut être montée sur une planche de sports de neige (10) de telle sorte qu'une extrémité arrière (356b) de la seconde partie (356) du cadre (350) est à au moins 40 centimètres au-dessus de la planche de sports de neige (10).

6. Ensemble de suspension (300) selon la revendication 5, dans lequel la base (310) peut être montée sur la planche de sports de neige (10) de telle sorte que l'extrémité arrière (356b) soit au moins 40 centimètres au-dessus de la planche de sports de neige (10) et comprenant jusqu'à 10 centimètres d'affaissement de l'amortisseur (330) résultant d'un utilisateur (500) assis sur le siège (390).

7. Ensemble de suspension (300) selon l'une quelconque des revendications 1 à 6, dans lequel le support de genou comprend une ou plusieurs plaques de genou (421) fixées à des côtés opposés du cadre (350) et s'étendant latéralement vers l'extérieur depuis le cadre (350).

8. Ensemble de suspension selon la revendication 7, dans lequel le cadre (350) comprend deux ou plusieurs supports de montage le long de chaque côté et dans lequel le support de genou (420) comprend des plaques gauche et droite (421) qui se connectent au cadre (350) en utilisant les supports de montage.

9. Ensemble de suspension (300) selon la revendication 7 ou 8, dans lequel chacune des une ou plusieurs plaques de genou (421) est configurée pour se plier contre la première partie du cadre (350).

10. Ensemble de suspension (300) selon l'une quelconque des revendications précédentes, dans lequel le support de genou est profilé (420) pour s'accoupler avec une partie inférieure de la jambe de l'utilisateur.

11. Ensemble de suspension (300) selon l'une quelconque des revendications précédentes, dans lequel le support de genou (420) a chacun une inclinaison réglable.

12. Ensemble de suspension (300) selon l'une quelconque des revendications 1 à 11, comprenant en outre un support de pied (400) configuré pour être fixé à la base (310) ou à la planche de sports de neige (10) derrière la base (310).

13. Ensemble de suspension selon l'une quelconque des revendications 1 à 12, dans lequel le cadre (350) pivote autour d'une extrémité supérieure (334) de l'amortisseur (330) lorsque l'amortisseur (330) est comprimé.

14. Ensemble de suspension selon l'une quelconque des revendications 1 à 13, dans lequel la seconde partie (356) du cadre (350) est fixée de manière amovible à la première partie (354) du cadre.

15. Ensemble de suspension selon la revendication 1, dans lequel le siège (390) comprend une partie inférieure et des plaques de hanche (394) s'étendant vers le haut depuis des côtés opposés de la partie inférieure.
